(19) Europäisches Patentamt
European Patent Office
Office européen des brevets

(11) **EP 1 829 835 A1**

(12) **EUROPÄISCHE PATENTANMELDUNG**

(43) Veröffentlichungstag:
**05.09.2007 Patentblatt 2007/36**

(51) Int Cl.:
***C03C 17/36*** $^{(2006.01)}$

(21) Anmeldenummer: **06004325.4**

(22) Anmeldetag: **03.03.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Applied Materials GmbH & Co. KG**
**63755 Alzenau (DE)**

(72) Erfinder:
- **Kleideiter, Gerd**
  **48683 Ahaus (DE)**

- **Geisler, Michael**
  **63607 Wächtersbach (DE)**
- **Schreiber, Udo**
  **63637 Jossgrund (DE)**
- **Schramm, Sven**
  **97070 Würzburg (DE)**

(74) Vertreter: **Schickedanz, Willi**
**Langener Strasse 68**
**63073 Offenbach (DE)**

(54) **Infrarotstrahlung reflektierendes Schichtsystem sowie Verfahren zu seiner Herstellung**

(57) Die Erfindung betrifft ein Infrarotstrahlung reflektierendes Schichtsystem für Glasscheiben und dergleichen, wobei die Eigenschaften des Schichtsystems auch noch nach einer Wärmebehandlung - beispielsweise zum Biegen oder Härten der Glasscheiben - erhalten bleiben. Als eigentliche die Infrarotstrahlung reflektierende Schicht wird Silber verwendet. Als Unterblocker für dieses Silber wird eine Kombination von $NiCrO_x$ und $Zn(Al)O_x$ eingesetzt. Außerdem wird eine stöchiometrische Schicht als Preblocker eingeführt. Für eine erste dielektrische Schicht aus $TiO_xN_y$ wird ein spezieller Arbeitspunkt gewählt. Wichtig für die Temperbarkeit der Beschichtung sind die Abstimmung der Schichtdicken und die Oxidationsgrade von $NiCrO_x$ und $ZnAlO_x$ als doppelter Unterblocker sowie der Arbeitspunkt der $TiO_xN_y$-Grundschicht.

| Layer | No. |
|-------|-----|
| 13 | |
| $TiO_2$ | 28 |
| $Si_3N_4$ | 27 |
| $NiCrO_x$ | 26 |
| $Ag$ | 25 |
| $ZnAlO_x$ | 24 |
| $NiCrO_x$ | 23 |
| $Si_3N_4$ | 22 |
| $TiO_2$ | 21 |
| $Si_3N_4$ | 20 |
| $NiCrO_x$ | 19 |
| $Ag$ | 18 |
| $ZnAlO_x$ | 17 |
| $NiCrO_x$ | 16 |
| $Si_3N_4$ | 15 |
| $TiO_xN_y$ | 14 |
| Substrat | 12 |

**Fig. 4**

Printed by Jouve, 75001 PARIS (FR)

EP 1 829 835 A1

## Beschreibung

Die Erfindung betrifft ein Infrarotstrahlung reflektierendes Schichtsystem nach dem Oberbegriff des Patentanspruchs 1 sowie ein Verfahren zu seiner Herstellung nach Patentanspruch 29.

Eine große Rolle spielen beschichtete Substrate beim Einsatz in Gebäuden oder Fahrzeugen. Hier sind es insbesondere großflächige Glasscheiben, die beschichtet werden müssen, um dann beispielsweise als Architekturglas in Gebäude oder als Automobilglas in Fahrzeuge eingebaut zu werden.

Die Anforderungen, die dabei an das Glas gestellt werden, sind hoch. Obwohl ausreichend sichtbares Licht durch das Glas hindurchkommen muss, darf häufig kein UV-Licht hindurch gelangen. Auch soll das Glas gleichzeitig zur Wärmeregulierung dienen, was dadurch erreicht wird, dass auf das Glas elektrisch hochleitende Schichten, häufig ein Metall wie Cu, Ag, Au mit einem sehr niedrigen Strahlungsemissionskoeffizienten aufgebracht wird. Diese Schichtsysteme mit mindestens einer als Infrarotstrahlung reflektierenden Schicht aus Au, Ag bzw. Au werden auch als Low-e(low-emissivity oder low emission)-Schichten bezeichnet, weil sie nur wenig Wärmestrahlung eines Gebäuderaums ins Freie abgeben.

Wegen der oft zu hohen Lichtreflexion dieser Low-e-Schichten werden diese Schichten mit Hilfe von zusätzlichen transparenten Schichten entspiegelt. Durch das Aufbringen dieser transparenten Schichten kann auch der gewünschte Farbton der Glasscheiben eingestellt werden. Außerdem dienen die auf Infrarotstrahlung reflektierende Schichten aufgebrachten Schichten auch einer hohen chemischen und mechanischen Beständigkeit des Schichtsystems.

Die so hergestellte Glasscheibe muss - wenn sie gebogen und/oder getempert werden soll - neben den üblichen mechanischen und chemischen Belastungen auch einen Temper- bzw. einen Biegeprozess ohne einen Schaden überstehen.

Es ist bereits eine Scheibe aus durchscheinendem Werkstoff mit hohem Transmissionsverhalten im sichtbaren Bereich und sehr hohem Reflexionsverhalten im Wärmestrahlungsbereich sowie ein Verfahren zu ihrer Herstellung bekannt (DE 195 20 843 A1). Auf dieser Scheibe ist eine aus mehreren Schichten bestehende Beschichtung aufgebracht, wobei Ag die eigentliche Infrarotstrahlung reflektierende Schicht bildet. Die mit der Beschichtung versehene Scheibe wird dabei nicht getempert bzw. gebogen.

Des Weiteren ist ein beschichtetes Substrat bekannt, das mindestens eine metallische Beschichtungsschicht und weitere dielektrische Schichten trägt (EP 1 089 947 B1). Hier wird das beschichtete Substrat nur einmal wärmebehandelt. Um die Metallschicht zu schützen, wird beim Beschichtungsvorgang die Metallschicht mit Subschichten auf der Basis von partiell oxidierten Metallen umgeben. Dieses beschichtete Substrat ist so aufgebaut, dass es getempert bzw. gebogen werden kann.

Dazu wird vor jeder Wärmebehandlung jede dielektrische Beschichtungsschicht mit einer Subschicht auf der Basis einer partiell oxidierten Kombination von zwei Metallen versehen.

Ein auf einem Substrat aufgebrachtes Mehrschichtsystem, das auch temper- und biegbar ist, ist ebenfalls bekannt (US 6 576 349 B2, US 6 686 050 B2). Das Mehrschichtsystem verfügt dabei über zwei Infrarotstrahlung reflektierende Schichten, die jeweils von zwei $NiCrO_x$-Schichten umgeben sind.

Schließlich ist ein wärmedämmendes Schichtsystem bekannt, welches nach der Beschichtung getempert und gebogen wird (DE 198 50 023 A1 bzw. EP 0 999 192 B1). Dieses Schichtsystem weist eine Edelmetallschicht auf, die auf einer $TiO_2$-Schicht angeordnet ist, wobei die beiden Schichten von unteroxidischem $NiCrO_x$ umgeben sind.

Ausgehend von der DE 198 50 023 A1 liegt der Erfindung die Aufgabe zugrunde, eine temper- und biegbare Beschichtung auf einem Substrat herzustellen, die wenigstens eine Infrarotstrahlung reflektierende Schicht aufweist, wobei verhindert wird, dass während des Temperns die Metallschicht, beispielsweise Ag, durch eindringenden Sauerstoff oder $Na^+$-Ionen angegriffen wird.

Die der Erfindung zugrunde liegende Aufgabe wird nach den Merkmalen der Patentansprüche 1 oder 29 gelöst.

Die Erfindung betrifft somit ein Infrarotstrahlung reflektierendes Schichtsystem für Glasscheiben und dergleichen, wobei die Eigenschaften des Schichtsystems auch noch nach einer Wärmebehandlung - beispielsweise zum Biegen oder Härten der Glasscheiben - erhalten bleiben. Als eigentliche die Infrarotstrahlung reflektierende Schicht wird Silber verwendet. Als Unterblocker für dieses Silber wird eine Kombination von $NiCrO_x$ und $Zn(Al)O_x$ eingesetzt. Außerdem wird eine stöchiometrische Schicht als Preblocker eingeführt. Für eine erste dielektrische Schicht aus $TiO_xN_y$ wird ein spezieller Arbeitspunkt gewählt. Wichtig für die Temperbarkeit der Beschichtung sind die Abstimmung der Schichtdicken und die Oxidationsgrade von $NiCrO_x$ und $ZnAlO_x$ als doppelter Unterblocker sowie der Arbeitspunkt der $TiO_xN_y$-Grundschicht.

Mit der Erfindung wird eine Beschichtung bereitgestellt, die trotz Temperprozesses farbneutral bleibt.

Damit während des Temperns, d. h. während des Aufheizens und anschließenden Abkühlens kein Sauerstoff von außen in die Infrarotstrahlung reflektierende Schicht gelangen kann, liegen direkt auf dem Substrat zwei dielektrische Schichten.

Die erste dielektrische Schicht dient nicht nur als Blockerschicht gegenüber Sauerstoff, sondern gewährleistet zudem eine Stabilität der optischen Parameter nach dem Tempern. Bevorzugt wird eine $TiO_2$- oder eine $TiO_xN_y$-Schicht eingesetzt, da in diesem Fall eine besonders gute mechanische Stabilität des beschichteten Substrates gewährleistet ist.

Auf diese erste dielektrische Schicht wird eine zweite dielektrische Schicht aufgetragen. Diese zweite Schicht, vorzugsweise $Si_3N_4$, dient als Preblocker-Schicht. Dadurch dass diese Preblocker-Schicht eine genau definierte Stöchiometrie besitzt, hat sie besonders gute Eigenschaften bezüglich der Undurchlässigkeit gegenüber Sauerstoff.

Auf diese Schicht wird eine Blocker-Schicht, vorzugsweise $NiCrO_x$ aufgetragen. Der Vorteil des Einsatzes eines Preblockers besteht ferner auch darin, dass der Sauerstoffgehalt der $NiCrO_x$-Schicht nicht mehr genau eingestellt werden muss.

Farbneutralität vor und nach dem Tempern, die chemische und mechanische Stabilität des Systems sowie die thermische Belastbarkeit werden durch die Kombination aus Preblocker (z. B. $Si_3N_4$), Blocker (z. B. $NiCrO_x$) und Haftvermittler (z. B. $ZnAlO_x$) erreicht.

Zum einen bleibt aufgrund der ersten Schicht, gerade im Fall von $TiO_xN_y$, die Farbneutralität des beschichteten Substrats erhalten. Zum anderen wird durch Anbringen einer zweiten dielektrischen Schicht als Preblocker verhindert, dass Sauerstoff oder andere Stoffe, wie z. B. $Na^+$-Ionen, in die darauffolgenden Schichten gelangt. Damit ist gewährleistet, dass die chemische und auch die mechanische Beständigkeit des beschichteten Substrats erhalten bleibt.

Wird die Schichtfolge von erstem Dielektrikum und Preblocker vertauscht, so kann auf einen Blocker verzichtet werden.

Durch diese Schichtfolge ohne einen Blocker wird eine besonders hohe Transmission erreicht.

Ausführungsbeispiele der Erfindung sind in den Zeichnungen dargestellt und werden nachfolgend näher erläutert. Es zeigen:

Fig. 1 ein auf einem Substrat angeordnetes Beschichtungssystem mit einer Infrarotstrahlung reflektierenden Schicht;

Fig. 2 eine Variante des in Fig. 1 dargestellten Beschichtungssystems;

Fig. 3 eine weitere Variante des in Fig. 1 dargestellten Beschichtungssystems;

Fig. 4 ein auf einem Substrat angeordnetes Beschichtungssystem mit zwei Infrarotstrahlung reflektierenden Schichten.

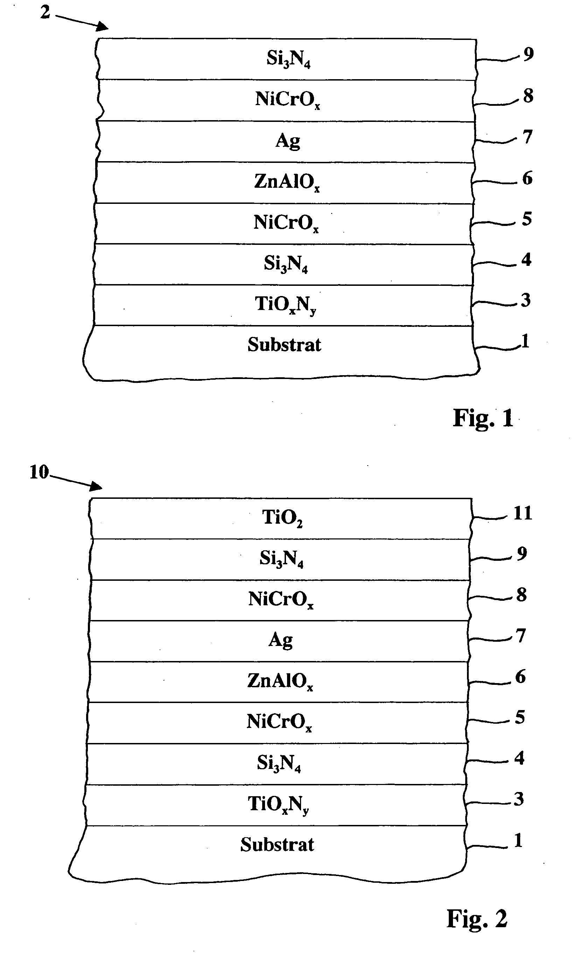

In Fig. 1 ist ein auf einem Substrat 1 angeordnetes Beschichtungssystem 2 dargestellt. Dieses Beschichtungssystem 2 weist mehrere Schichten 3 bis 9 auf und wird durch ein Sputterverfahren hergestellt, wobei jede der Schichten 3 bis 9 nacheinander gesputtert wird.

Auf dem Substrat 1, vorzugsweise Glas, wird eine erste dielektrische Schicht 3 mittels reaktivem Sputtern aufgetragen. Diese Schicht 3 weist ein Dielektrikum wie z. B. ZnO, $SnO_2$, $In_2O_3$, $Bi_2O_3$, $TiO_2$, $ZrO_2$, $Ta_2O_5$,

$SiO_2$, $Al_2O_3$, AlN, $Si_3N_4$ oder $TiO_xN_y$, vorzugsweise jedoch $TiO_2$, $Si_3N_4$ oder $TiO_xN_y$ auf. Gerade die Verbindung des Typs $TiO_xN_y$ sowie $TiO_2$ hat sich als besonders vorteilhaft herausgestellt, da das beschichtete Substrat 1 dadurch nach dem Tempern besonders gute Farbstabilität bietet, wobei die gewünschte chemische und mechanische Beständigkeit erhalten bleibt oder gar erhöht ist gegenüber einem Substrat, das mit einer anderen Verbindung als $TiO_xN_y$ bzw. $TiO_2$ beschichtet worden ist.

$TiO_xN_y$ wird durch reaktives Sputtern im Transitionmode eines Metalltargets erhalten. Gesputtert wird in diesem Fall vorzugsweise mit einer MF-Technologie, meistens mit einer stabilisierenden Regelung wie z. B. mit einer Lambdasonde oder PEM (= Plasma-Emissions-Messung).

Es kann aber auch $TiO_2$ von einem keramischen $TiO_x$-Target gesputtert werden, wenn $TiO_2$ die Schicht 3 bilden soll. Obwohl eine geringe Menge an Sauerstoff dem Argon beigemengt wird, handelt es sich nicht um ein reaktives Sputtern. Das Sputtern erfolgt dabei mittels der MF- oder DC-Technik, wobei die DC-Technik kostengünstiger ist. Hysteresis-Kennlinien bzw. Transitionmodes treten bei diesem Prozess nicht auf.

Wenn $TiO_xN_y$ als die erste auf dem Substrat 1 angeordnete Schicht 3 gewählt wird, muss auf dieser Schicht 3 eine weitere dielektrische Schicht 4 angeordnet sein, damit kein Sauerstoff oder keine Natriumionen in die oberen Schichten gelangen.

Diese auf der Schicht 3 liegende Schicht 4 kann mit Ausnahme von $TiO_xN_y$ eine der Verbindungen enthalten, die auch in der Schicht 3 vorhanden sind. Vorzugsweise wird jedoch $Si_3N_4$ oder $TiO_2$ eingesetzt. Die Schicht 4 wirkt damit als ein Preblocker, da sie lediglich stöchiometrische Verbindungen aufweist und vor einer Blockerschicht angeordnet ist, um zu verhindern, dass Sauerstoff in die oberen Schichten eindringt, oder zumindest die Diffusion von Sauerstoff deutlich zu vermindern. Hierdurch kommt es auf die Stöchiometrie der oberen Schichten nicht mehr an.

Die Schicht 4 verhindert, dass Sauerstoff oder Natriumionen in die oberen Schichten 5 bis 9 gelangen, wodurch die chemische und mechanische Beständigkeit des beschichteten Substrats auch nach dem Tempern erhalten bleibt.

Besteht jedoch die Schicht 3 aus einer stöchiometrischen Verbindung, so bedarf es keiner darauf angebrachten zweiten dielektrischen Schicht 4, da bereits die Schicht 3 eine solche Blockereigenschaft gegenüber Sauerstoff oder Natriumionen aufweist. Dennoch kann eine solche Schicht 4 optional auf die Schicht 3 aufgetragen werden.

Die Dicke der Schichten 3 und 4 beträgt in der Summe ca. 25 nm, wobei die Dicke der Schicht 3 ungefähr 15 bis 19 nm beträgt und somit stets größer ist als die Schicht 4.

Auf die Schicht 4 wird eine Schicht 5 aufgetragen. Diese Schicht 5 dient als Blockerschicht gegenüber Sauerstoff, wobei diese aus Ti, $TiO_x$, Cr, $CrO_x$, Nb, $NbO_x$,

NiCr oder NiCrO$_x$ bestehen kann, vorzugsweise jedoch aus NiCr oder NiCrO$_x$. Gerade im Fall der nichtstöchiometrischen Schicht der Zusammensetzung NiCrO$_x$ ist die Blockereigenschaft gegenüber Sauerstoff als gut zu beurteilen, da der Sauerstoff aufgrund der Fehlstellen in das NiCr-Metallgitter eingebaut werden kann. Diese Schicht 5 weist eine Schichtdicke von ca. 3 bis 6 nm auf.

Auf diese Schicht 5 wird eine weitere Schicht 6 durch reaktives Sputtern aufgetragen. Diese Schicht 6 enthält TaO$_x$, ZnO$_x$, ZnTaO$_x$ oder ZnAlO$_x$, wobei ZnAlO$_x$ bevorzugt eingesetzt wird.

Eine Möglichkeit, ZnAlO$_x$ aufzubringen, besteht darin, ein Metalltarget mittels der MF-Technik zu sputtern. Dieses Metalltarget enthält dabei sowohl A1 als auch Zn.

Vorzugsweise wird ZnAlO$_x$ durch Sputtern eines keramischen Targets erhalten. Da diese ZnAlO$_x$-Schicht eine unterstöchiometrische Schicht ist, kann das Sputtern unter einer Ar-Atmosphäre stattfinden, wobei dem Ar geringe Mengen an O$_2$ beigemengt sind. Ein Sputtern unter einer Atmosphäre aus reinem Argon ist aber ebenfalls möglich.

Vorzugsweise werden dann geringe Mengen an O$_2$ hinzugegeben, wenn die ZnAlO$_x$-Schicht eine geringe Absorption, z. B. eine Absorption von 1 bis 2 %, aufweisen soll.

Im Gegensatz zu den Verbindungen der Schicht 5 besitzen TaO$_x$, ZnO$_x$, ZnTaO$_x$ bzw. ZnAlO$_x$ nicht nur Blockereigenschaften gegenüber dem Sauerstoff, sondern auch gute Hafteigenschaften für die auf ihr aufgebrachten Infrarotstrahlung reflektierenden Schichten. Diese Infrarotstrahlung reflektierenden Schichten weisen vorzugsweise ein Metall der ersten Nebengruppe des Periodensystems oder eine Legierung mindestens eines dieser Metalle auf. Würde nämlich die Infrarotstrahlung reflektierende Schicht auf eine NiCrO$_x$-Schicht aufgebracht, so müsste der Sauerstoffgehalt dieser NiCrO$_x$-Schicht genau eingestellt werden. Ist der Sauerstoffgehalt zu niedrig, so ist die NiCrO$_x$-Schicht zu metallisch und die Haftfestigkeit bezüglich der aufgebrachten Metallschicht 7 zu niedrig. Ist der Sauerstoffgehalt hingegen zu hoch, so besitzt die NiCrO$_x$-Schicht keine guten Blockereigenschaften gegenüber dem Sauerstoff.

Wenn der Sauerstoffgehalt zu hoch ist, kann die suboxidische Schicht NiCrO$_x$ während des Temperns nicht genügend Sauerstoff aufnehmen. Der Sauerstoff würde deshalb in die Infrarotstrahlung reflektierende Schicht gelangen, wodurch sich die chemische Beständigkeit dieser Metallschicht verschlechtern würde. Diese Probleme werden durch das Aufbringen einer zweiten Blockerschicht, der Schicht 6 umgangen. Bevorzugt wird für die Schicht 6 ZnAlO$_x$ eingesetzt, das durch reaktives Sputtern aufgebracht wird. Gegenüber ZnO$_x$, welches häufig eingesetzt wird (z. B. DE 195 20 843 A1) und ebenfalls eine gute Haftfestigkeit aufweist, besitzt ZnAlO$_x$ den Vorteil, dass die Haftfestigkeit gegenüber der Infrarotstrahlung reflektierende Schicht auch während des Temperns erhalten bleibt.

Da bereits sehr geringe Schichtdicken der Schicht 6 genügen, um ein gutes Wachstum der Infrarotstrahlung reflektierenden Schichten zu erhalten, reicht eine Schichtdicke von ungefähr 1 nm aus.

Auf die Schicht 6 wird eine Infrarotstrahlung reflektierende Schicht 7 aufgetragen. Diese Infrarotstrahlung reflektierende Schicht weist ein Metall der ersten Nebengruppe des Periodensystems oder eine Legierung mindestens eines dieser Metalle auf. Vorzugsweise enthält die Infrarotstrahlung reflektierende Schicht jedoch Ag, wobei das Ag durch Sputtern unter Sauerstoff aufgebracht wird. Dieser Sauerstoff, der in die Ag-Schicht eingebaut wird, bringt eine gute chemische Beständigkeit mit sich. Die Schichtdicken dieser Ag-Schichten betragen ca. 11 bis 13 nm.

Auf die Ag-Schicht 7 wird wiederum eine Blockerschicht 8 aufgebracht. Diese Schicht 8 enthält vorzugsweise NiCrO$_x$, wobei auch Ti, TiO$_x$, Cr, CrO$_x$, Nb, NbO$_x$ oder NiCr die Schicht 8 bilden können.

Die Dicke der Schicht 8 beträgt ungefähr 3 bis 6 nm. Als letzte Schicht folgt eine dielektrische Schicht 9, die aus einem der Elemente bestehen kann, aus der auch die zweite dielektrische Schicht 4 besteht. Vorzugsweise besteht die Schicht 9, wie auch in Fig. 1 dargestellt, aus Si$_3$N$_4$. Die Schichtdicke der Schicht 9 beträgt ungefähr 30 bis 45 nm.

Gegenüber anderen Schichtsystemen hat das in Fig. 1 gezeigte Schichtsystem folgende Vorteile:

Durch die Schicht 3, die TiO$_x$N$_y$ aufweist, wird gewährleistet, dass das beschichtete Substrat während des Temperns gebogen werden kann, ohne dass das beschichtete Substrat Einbußen in der mechanischen und chemischen Beständigkeit erfährt. Der Stickstoff im TiO$_2$ vermindert Stress, was bei dickeren Schichten insofern von Vorteil ist, als dadurch die Tendenz zu Rissen und Pinholes in der Beschichtung vermindert wird.

Die Schicht 4, die als Preblocker dient, vermindert das Eindringen von Natriumionen sowie Sauerstoff in die oberen Schichten 5 bis 9.

Auf die NiCrO$_x$ enthaltende Schicht 5 wird eine Haftschicht 6 aufgebracht, die gleichzeitig auch als Blockerschicht dient. Der Sauerstoffgehalt der NiCrO$_x$-Schicht muss deshalb nicht mehr genau eingestellt werden. Diese Schicht 6 weist vorzugsweise ZnAlO$_x$ auf.

Die Schicht 6 besitzt eine gute Haftfestigkeit gegenüber der Infrarotstrahlung reflektierenden Schicht 7.

Da Si$_3$N$_4$ und Ag schlecht aufeinander haften, muss mindestens eine Schicht eines anderen Materials als Haftvermittler dazwischen aufgebracht werden. Weil ZnAlO$_x$ unter Umständen so dünn ist, dass es keine geschlossene Schicht bildet, muss zusätzlich ein weiteres Material zwischen Si$_3$N$_4$ und Ag liegen. Dieses Material ist entweder TiO$_2$ oder TiO$_x$N$_y$ oder NiCrO$_x$. Mit dem Aufbau Glas / Si$_3$N$_4$ / TiO$_2$ / Ag ... TiO$_x$N$_y$ kann man auf das NiCrO$_x$ unter dem Ag verzichten und somit bei der Auslegung einer Beschichtungsanlage für Doppelsilber Low-e auf zwei Beschichtungsstationen mit den dazu gehörigen Gastrennungen verzichten, was Platz und Kosten erspart. Anstelle von $TiO_2$ kann an jeder Stelle des Schichtsystems auch $TiO_xN_y$ verwendet werden.

Die in Fig. 1 auf $ZnAlO_x$ angeordnete Ag-Schicht 7 kann durch die gute Haftfestigkeit der Schicht 6 eine sehr geringe Schichtdicke aufweisen, verglichen mit anderen Schichten, auf denen eine Ag-Schicht angeordnet ist.

Trotz dieser recht geringen Schichtdicke besitzt die Ag-Schicht eine sehr gute IR-Reflexion, da der Flächenwiderstand erhalten bleibt. Dies ist nicht zuletzt dadurch bedingt, dass die Ag-Schicht auf einer $ZnAlO_x$-Schicht optimal wachsen kann.

Fig. 2 zeigt eine Variante des in Fig. 1 dargestellten beschichteten Substrats 1. Im Gegensatz zum Beschichtungssystem 2 in Fig. 1 ist auf dem Beschichtungssystem 10 eine weitere Schicht 11 aufgetragen. Diese Schicht 11 kann ZnO, $SnO_2$, $In_2O_3$, $Bi_2O_3$, $TiO_2$, $ZrO_2$, $Ta_2O_5$, $SiO_2$, $Al_2O_3$, AlN oder $Si_3N_4$ sein oder enthalten, vorzugsweise jedoch $Si_3N_4$ oder $TiO_2$. $TiO_2$ als Deckschicht verbessert die chemische Beständigkeit des Schichtsystems 10.

Da die Schicht 9 $Si_3N_4$ aufweist, wird die Schicht 11 durch reaktives Sputtern mit $TiO_2$ beschichtet. Es ist jedoch auch denkbar, dass die Schicht 11 durch Sputtern eines keramischen Targets aufgebracht wird. Dadurch, dass auf die Schicht 9 eine weitere Schicht 11 aufgetragen wurde, kann die Schichtdicke der Schicht 9 verringert werden. Vorzugsweise besitzt die Summe der beiden Schichtdicken der Schichten 9 und 11 auch weiterhin eine Gesamtdicke von ca. 37 bis 44 nm. Von Vorteil ist dabei, dass durch Anbringen von zwei dielektrischen Schichten 9 und 11 mit unterschiedlicher Zusammensetzung sich die Eigenschaften der Verbindungen ergänzen.

Im Folgenden wird der Prozess des Aufbringens der einzelnen Schichten beschrieben.

Vorzugsweise werden die Schichten 3 bis 9 und 11 des Schichtsystems 10 bzw. die Schichten 3 bis 9 des Schichtsystems 2 in Fig. 1 durch reaktives Sputtern und/ oder durch Sputtern eines keramischen Targets aufgebracht. Obwohl die Schichten 5, 6, 7, 8 auch durch Sputtern der entsprechenden metallischen Targets unter Argon aufgebracht werden können, z. B. im Falle von Ti, Nb, Cr, Ag, NiCr, ist das Sputtern unter Argon mit geringen Mengen an Sauerstoff von Vorteil, da die Schichten 5, 6, 8, wenn sie aus suboxidischen Verbindungen bestehen, eine bessere Blockereigenschaft gegenüber Sauerstoff aufweisen, und im Falle von Ag durch den Einbau von Sauerstoff die chemische Beständigkeit verbessert ist, verglichen mit einer Schicht aus reinem Ag.

Obwohl man das Silber manchmal unter Beigabe von Sauerstoff sputtert, kann dieser Vorgang nicht als Reaktivsputtern bezeichnet werden. Beim Sputtern unter Sauerstoffbeigabe wird die Plasmaentladung nicht durch den Sauerstoff bestimmt. Die Targetoberfläche ist im Wesentlichen metallisch, und damit verhält sich die Entladung wie ein metallischer Sputterprozess. Die aufgesputterte Schicht kann man eher als sauerstoffdotiert bezeichnen, d. h. sie besteht im Wesentlichen aus Silber, das wenige Prozent Silberoxid enthält. Das Prozessgas enthält deutlich weniger als 10 %, eher 1 % bis 5 % Sauerstoffanteile. Um Silber reaktiv zu sputtern, wären mindestens 50 % Sauerstoffanteile im Prozessgas nötig. Tatsächlich reaktiv abgeschiedene Schichten aus Silberoxid wären dunkel bis schwarz.

Der Sputterprozess wird für alle Schichten bei einem Druck von ca. $2 \times 10^{-3}$ bis $5 \times 10^{-3}$ mbar durchgeführt. Dabei wird dem Inertgas, vorzugsweise Ar, Reaktivgas, bevorzugt $O_2$ oder $N_2$, hinzugefügt. Vorzugsweise beträgt das Verhältnis von Ar : $O_2$ 3 : 1, und falls auch $N_2$ zum Herstellen der Schicht benötigt wird, wie im Falle einer $TiO_xN_y$-Schicht, beträgt das Verhältnis von $O_2$ : $N_2$ 5 : 1.

Dieser Druck sowie das Verhältnis der Gase zueinander haben sich für den Sputterprozess zum Herstellen dieser Schichten als optimal herausgestellt, obwohl auch mit einem anderen Druck und einer anderen Zusammensetzung der Gasmischung gearbeitet werden kann.

Neben diesen beiden Parametern spielt auch die Leistung, mit der gesputtert wird, eine große Rolle.

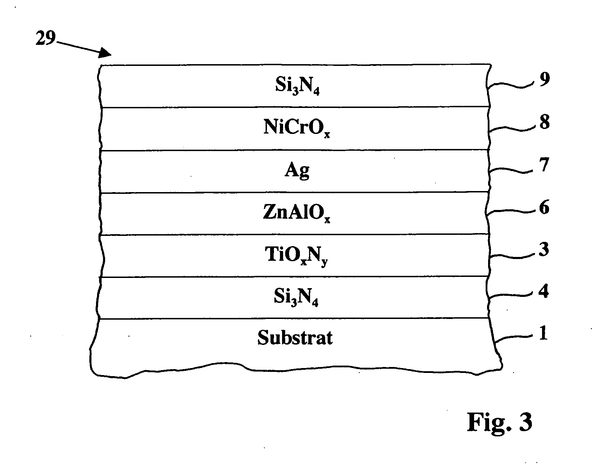

In Fig. 3 ist eine weitere Variante des in Fig. 1 dargestellten Beschichtungssystems 2 gezeigt. In dem in Fig. 3 gezeigten Beschichtungssystem 29 ist nicht die Schicht 3, sondern die Schicht 4 direkt auf dem Substrat 1 angeordnet. Schicht 3 und 4 haben somit die Plätze getauscht.

Obwohl Schicht 3 in Fig. 3 $TiO_xN_y$ aufweist, kann Schicht 3 auch $TiO_2$ aufweisen. Dadurch, dass die Schicht 3 nun nicht mehr auf dem Substrat 1 angeordnet ist, nimmt die chemische und mechanische Beständigkeit ab. Jedoch kann durch diese Anordnung auf die Schicht 5, die $NiCrO_x$-Blockerschicht, verzichtet werden, da die $ZnAlO_x$-Schicht auf der $TiO_xN_y$-Schicht besser haftet als auf der $Si_3N_4$-Schicht.

Vorteilhaft bei diesem Beschichtungssystem 29 ist, dass durch den Wegfall der ersten Blockerschicht die Transmission gegenüber dem in Fig. 1 bzw. 2 dargestellten Beschichtungssystem 2 erhöht ist.

Ist somit eine erhöhte Transmission gewünscht und sind an die mechanische und chemische Beständigkeit geringere Anforderungen zu stellen, so ist dieses Beschichtungssystem von Vorteil.

Obwohl in Fig. 3 nicht gezeigt, kann auf die Schicht 9 eine weitere Schicht 11, analog Fig. 2, aufgetragen werden, wobei die Schicht 11 vorzugsweise $TiO_2$ aufweist.

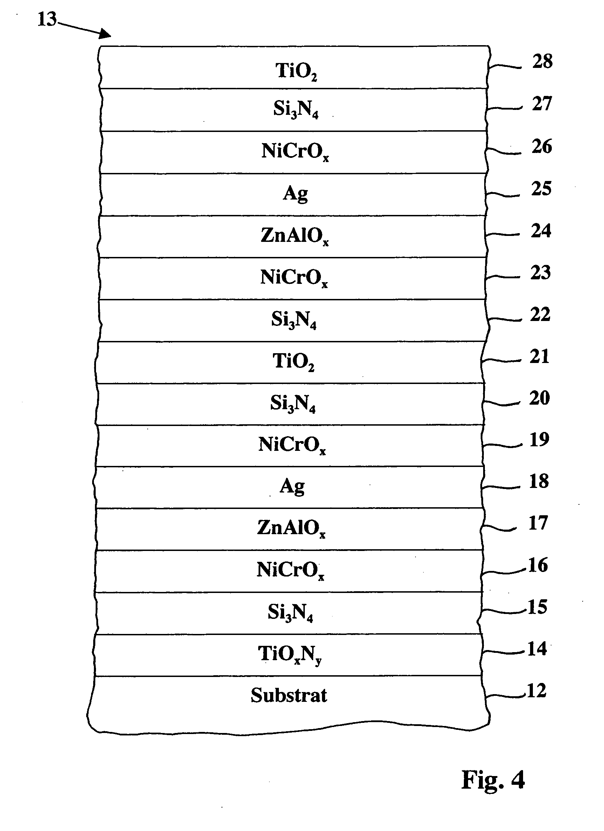

Fig. 4 zeigt ein auf einem Substrat 12 angeordnetes Beschichtungssystem 13 mit zwei Infrarotstrahlung reflektierenden Schichten 18, 25.

Wie in Fig. 4 zu sehen, unterscheiden sich die Schichten 14 bis 21 in ihrer Zusammensetzung und Reihenfolge nicht von dem in Fig. 2 dargestellten Beschichtungssystem 10. Auf die Schicht 21 sind sieben weitere Schichten aufgetragen, nämlich die Schichten 22 bis 28. Dabei handelt es sich bei der Schicht 25 um die zusätzlich angebrachte Infrarotstrahlung reflektierende Schicht.

Die auf der Schicht 21 aufgesputterten Schichten 22 bis 28 besitzen die gleiche Zusammensetzung und auch Reihenfolge wie die sieben Schichten 15 bis 21. Somit wird, nachdem das Substrat 12 mit einer ersten dielektrischen Schicht 14 beschichtet wurde, zweimal hintereinander mit der Schichtfolge $Si_3N_4$, $NiCrO_x$, $ZnAlO_x$, Ag, $NiCrO_x$, $Si_3N_4$ und $TiO_2$ beschichtet. Damit wird aus einem Beschichtungssystem mit nur einer Infrarotstrahlung reflektierenden Schicht das Beschichtungssystem 13 mit zwei Infrarotstrahlung reflektierenden Schichten.

Wie zu erkennen, besteht damit das Beschichtungssystem 13 im Prinzip aus zwei aufeinander gestapelten Beschichtungssystemen 10, abgesehen von der $TiO_xN_y$-Schicht. Dies hat den Vorteil, dass bei einem Sputterprozess mit dem gleichen Targetmaterial gearbeitet werden kann. Sind nämlich auf das Substrat 12 Schichten 14 bis 21 aufgebracht worden, so kann der Beschichtungsprozess einfach wiederholt werden, ohne dass das Targetmaterial durch ein komplett neues und anderes Targetmaterial ausgetauscht werden muss.

Da in Fig. 4 ein bevorzugtes Beschichtungssystem 13 mit zwei Infrarotstrahlung reflektierenden Schichten 18, 25 dargestellt ist, kann die Zusammensetzung auch variieren.

Obwohl die Schicht 14 bevorzugt aus $TiO_xN_y$ besteht, kann die Schicht 14 ZnO, $SnO_2$, $In_2O_3$, $Bi_2O_3$, $TiO_2$, $ZrO_2$, $Ta_2O_5$, $SiO_2$, $Al_2O_3$, AlN oder $Si_3N_4$ aufweisen.

Die Schichten 15, 20, 21, 22, 27, 28 können hingegen mindestens eine Verbindung aus der Reihe $Si_3N_4$, AlN, $Al_2O_3$, $SiO_2$, $Ta_2O_5$, $ZrO_2$, $TiO_2$, $Bi_2O_3$, $In_2O_3$, $SnO_2$ und/oder ZnO aufweisen. Diese Schichten werden durch reaktives Sputtern oder durch Sputtern eines entsprechenden keramischen Targets aufgebracht.

Die Schichten 16, 19, 23, 26 können Ti, $TiO_x$, Cr, $CrO_x$, Nb, $NbO_x$, NiCr oder $NiCrO_x$ enthalten. Die Haftschichten 17, 24 enthalten TaO, $ZnO_x$, $ZnTaO_x$ bzw. $ZnAlO_x$.

Die Infrarotstrahlung reflektierenden Schichten 18, 25 weisen zwar bevorzugt Ag auf, können aber auch Cu, Au bzw. eine Legierung dieser Metalle aufweisen.

Dabei unterscheiden sich die Schichtdicken des Beschichtungssystems 13 kaum von einem Beschichtungssystem mit nur einer Infrarotstrahlung reflektierenden Schicht, wie in Fig. 1 bis 3 gezeigt.

Ein Unterschied besteht lediglich in der Dicke der Schichten 20 bis 22. Obwohl die Dicke der Schichten 20 bis 22 unterschiedlich sein kann, liegt die Summe der Schichtdicken dieser Schichten 20 bis 22 bei ca. 70 bis 90 nm.

Die Materialien der Schichten 20 bis 22 sind austauschbar, sodass die Schicht 21 aus $Si_3N_4$ und die Schichten 20, 22 aus $TiO_2$ bestehen können.

Auch ist es möglich, dass zwischen den $NiCrO_x$-Schichten 19, 23 nur zwei oder gar nur eine Schicht angeordnet ist. Sind z. B. zwei Schichten zwischen den beiden $NiCrO_x$-Schichten 19, 23 angeordnet, so kann die eine Schicht z. B. aus $TiO_2$ und die andere Schicht aus $Si_3N_4$ bestehen, wobei die Reihenfolge der Schichten keine Rolle spielt.

Auch bei diesem Beschichtungssystem 13 kann die Schicht 15 mit der Schicht 14 vertauscht werden. Da nun die Schicht 15 auf dem Substrat 12 angeordnet ist, nimmt zwar die chemische und mechanische Beständigkeit ab, jedoch kann dadurch auf die Schichten 16 und 23 verzichtet werden, wodurch die Transmission des Beschichtungssystems 13 erhöht werden kann.

Ein Beschichtungssystem mit mehr als zwei Infrarotstrahlung reflektierenden Schichten ist ebenfalls denkbar. Dabei ist zu bedenken, dass ein Beschichtungssystem mit nur einer Infrarotstrahlung reflektierenden Schicht gegenüber einem Beschichtungssystem mit zwei Infrarotstrahlung reflektierenden Schichten eine um ca. 5 bis 10 % geringere Transmission an sichtbarem Licht aufweist. Die Transmisson nimmt somit mit zunehmender Zahl der Infrarotstrahlung reflektierenden Schichten ab. Ein Beschichtungssystem mit zwei Infrarotstrahlung reflektierenden Schichten besitzt jedoch den Vorteil, dass die IR-Reflexion um fast 100 % erhöht ist. Ein Beschichtungssystem mit zwei Infrarotstrahlung reflektierenden Schichten bietet also eine sehr gute Wärmeregulation bei einem nur geringen Verlust an Transmission.

Die Selektivität S dieser Systeme ist signifikant höher, wobei sich die Selektivität S zu $S = \dfrac{T_{vis}}{T_{IR}}$ ergibt, mit $T_{vis}$ = Transmission im sichtbaren Bereich und $T_{IR}$ = Transmission im infraroten Bereich.

## Patentansprüche

1. Infrarotstrahlung reflektierendes Schichtsystem, insbesondere für zu biegende und/oder zu härtende Glasscheiben, mit mindestens einer Infrarotstrahlung reflektierenden Schicht, aufweisend:

   a) eine erste auf einem Substrat (1, 12) angeordnete dielektrische Schicht (3, 14), gefolgt von
   b) einer ersten Blockerschicht (5, 16),
   c) einer Haftvermittlerschicht (6, 17, 24),
   d) einer Infrarotstrahlung reflektierenden Schicht (7, 18, 25),
   e) einer zweiten Blockerschicht (8, 19, 26) sowie
   f) einer zweiten dielektrischen Schicht (9, 20, 27),

   **dadurch gekennzeichnet, dass** zwischen der ersten dielektrischen Schicht (3, 14) und der ersten Blockerschicht (5, 16) eine Preblockerschicht (4, 15) angeordnet ist.

2. Schichtsystem nach Anspruch 1, **dadurch gekennzeichnet, dass** die erste dielektrische Schicht (3, 14) aus $ZnO$, $SnO_2$, $In_2O_3$, $Bi_2O_3$, $TiO_2$, $ZrO_2$, $Ta_2O_5$, $Al_2O_3$, $AlN$, $Si_3N_4$ und/oder $TiO_xN_y$ besteht oder diese Stoffe aufweist.

3. Schichtsystem nach Anspruch 2, **dadurch gekennzeichnet, dass** die erste dielektrische Schicht (3, 14) $TiO_xN_y$ ist.

4. Schichtsystem nach Anspruch 2, **dadurch gekennzeichnet, dass** die erste dielektrische Schicht (3, 14) $TiO_2$ ist.

5. Schichtsystem nach Anspruch 1, **dadurch gekennzeichnet, dass** die erste und zweite Blockerschicht (5, 8, 16, 19, 23, 26) aus $TiO_x$, Ti, Ni, Cr, NiCr, Nb, $NbO_x$, $CrO_x$ besteht und/oder $NiCrO_x$ besteht oder diese Stoffe aufweist.

6. Schichtsystem nach Anspruch 1, **dadurch gekennzeichnet, dass** die Haftvermittlerschicht (6, 17, 24) aus $ZnO_x$, $TaO_x$, $ZnTaO_x$ und/oder $ZnAlO_x$ besteht oder diese Stoffe aufweist.

7. Schichtsystem nach Anspruch 1, **dadurch gekennzeichnet, dass** die Infrarotstrahlung reflektierende Schicht (7, 18, 25) aus einem Metall der ersten Nebengruppe des Periodensystems und/oder aus einer Legierung mindestens eines dieser Metalle besteht oder diese Stoffe aufweist.

8. Schichtsystem nach Anspruch 6, **dadurch gekennzeichnet, dass** die Infrarotstrahlung reflektierende Schicht (7, 18, 25) aus Ag besteht oder Ag enthält.

9. Schichtsystem nach Anspruch 7 und Anspruch 8, **dadurch gekennzeichnet, dass** die Infrarotstrahlung reflektierende Schicht (7, 18, 25) Sauerstoff enthält.

10. Schichtsystem nach Anspruch 1, **dadurch gekennzeichnet, dass** die zweite dielektrische Schicht (9, 20, 27) aus $Si_3N_4$, $TiO_2$, $AlN$, $Al_2O_3$, $SiO_2$, $Ta_2O_5$, $ZrO_2$, $Bi_2O_3$, $In_2O_3$, $SnO_2$ und/oder $ZnO$ besteht oder diese Stoffe enthält.

11. Schichtsystem nach Anspruch 1, **dadurch gekennzeichnet, dass** die Preblockerschicht (4, 15) stöchiometrisch aufgebaut ist.

12. Schichtsystem nach Anspruch 11, **dadurch gekennzeichnet, dass** die Preblockerschicht (4, 15) aus $TiO_2$ und/oder $Si_3N_4$ besteht oder diese Stoffe aufweist.

13. Schichtsystem nach Anspruch 1, **dadurch gekenn-** **zeichnet, dass** auf der zweiten dielektrischen Schicht (9, 20, 27) eine weitere Schicht (11, 21, 28) angeordnet ist.

14. Schichtsystem nach Anspruch 13, **dadurch gekennzeichnet, dass** die weitere Schicht (11, 21, 28) $TiO_2$ ist oder $TiO_2$ enthält.

15. Infrarotstrahlung reflektierendes Schichtsystem, insbesondere für zu biegende und/oder zu härtende Glasscheiben, mit mindestens einer Infrarotstrahlung reflektierenden Schicht, aufweisend:

   a) einen ersten auf einem Substrat (1, 12) angeordneten Preblocker (4, 15), gefolgt von
   b) einer ersten dielektrischen Schicht (3, 14),
   c) einer Haftvermittlerschicht (6, 17, 24),
   d) einer Infrarotstrahlung reflektierenden Schicht (7, 18, 25),
   e) einer Blockerschicht (8, 19, 26) sowie
   f) einer zweiten dielektrischen Schicht (9, 20, 27)

16. Schichtsystem nach Anspruch 15, **dadurch gekennzeichnet, dass** auf der zweiten dielektrischen Schicht (9, 20, 27) eine weitere Schicht (11, 21, 28) angeordnet ist.

17. Schichtsystem nach Anspruch 16, **dadurch gekennzeichnet, dass** die weitere Schicht (11, 21, 28) $TiO_2$ ist oder $TiO_2$ enthält.

18. Schichtsystem nach Anspruch 15, **dadurch gekennzeichnet, dass** die erste dielektrische Schicht (3, 14) aus $ZnO$, $SnO_2$, $In_2O_3$, $Bi_2O_3$, $TiO_2$, $ZrO_2$, $Ta_2O_5$, $Al_2O_3$, $AlN$, $Si_3N_4$ und/oder $TiO_xN_y$ besteht oder diese Stoffe aufweist.

19. Schichtsystem nach Anspruch 18, **dadurch gekennzeichnet, dass** die erste dielektrische Schicht (3, 14) $TiO_xNy$ ist oder $TiO_xNy$ enthält.

20. Schichtsystem nach Anspruch 18, **dadurch gekennzeichnet, dass** die erste dielektrische Schicht (3, 14) $TiO_2$ ist oder $TiO_2$ enthält.

21. Schichtsystem nach Anspruch 15, **dadurch gekennzeichnet, dass** die Blockerschicht (8, 19, 26) aus $TiO_x$, Ti, Ni, Cr, NiCr, Nb, $NBO_x$, $CrO_x$ und/oder $NiCrO_x$ besteht oder diese Stoffe aufweist.

22. Schichtsystem nach Anspruch 15, **dadurch gekennzeichnet, dass** die Haftvermittlerschicht (6, 17, 24) aus $ZnO_x$, $TaO_x$, $ZnTaO_x$ und/oder $ZnAlO_x$ besteht oder diese Stoffe aufweist.

23. Schichtsystem nach Anspruch 15, **dadurch gekennzeichnet, dass** die Infrarotstrahlung reflektierende Schicht (7, 18, 25) aus einem Metall der ersten Nebengruppe des Periodensystems und/oder aus einer Legierung besteht oder mindestens eines dieser Metalle enthält.

24. Schichtsystem nach Anspruch 23, **dadurch gekennzeichnet, dass** die Infrarotstrahlung reflektierende Schicht (7, 18, 25) aus Ag besteht oder Ag enthält.

25. Schichtsystem nach Anspruch 24, **dadurch gekennzeichnet, dass** die Infrarotstrahlung reflektierende Schicht (7, 18, 25) Sauerstoff aufweist.

26. Schichtsystem nach Anspruch 15, **dadurch gekennzeichnet, dass** die zweite dielektrische Schicht (9, 20, 27) aus $Si_3N_4$, $TiO_2$, AlN, $Al_2O_3$, $SiO_2$, $Ta_2O_5$, $ZrO_2$, $Bi_2O_3$, $In_2O_3$, $SnO_2$ und/oder ZnO besteht oder diese Stoffe aufweist.

27. Schichtsystem nach Anspruch 15, **dadurch gekennzeichnet, dass** die Preblockerschicht (4, 15) stöchiometrisch aufgebaut ist.

28. Schichtsystem nach Anspruch 27, **dadurch gekennzeichnet, dass** die Preblockerschicht (4, 15) aus $TiO_2$ und/oder $Si_3N_4$ besteht oder diese Stoffe aufweist.

29. Verfahren zum Herstellen eines Infrarotstrahlung reflektierenden Schichtsystems für gebogene und/oder gehärtete Glasscheiben, enthaltend folgende Schritte:

    a) es wird ein Substrat (1, 12) bereitgestellt,
    b) auf das Substrat (1, 12) wird eine erste dielektrische Schicht (3, 14) aufgebracht,
    c) auf diese erste dielektrische Schicht (3, 14) wird ein Preblocker (4, 15) aufgebracht,
    d) auf dem Preblocker (4, 15) wird eine erste Blockerschicht (5, 16, 23) aufgebracht,
    e) auf diese Blockerschicht (5, 16, 23) wird eine Haftvermittlerschicht (6, 17, 24) aufgebracht,
    f) auf die Haftvermittlerschicht (6, 17, 24) wird eine Infrarotstrahlung reflektierende Schicht (7, 18, 25) aufgebracht,
    g) auf der Infrarotstrahlung reflektierende Schicht (7, 18, 25) wird eine zweite Blockerschicht (5, 19, 26) aufgebracht,
    h) auf diese zweite Blockerschicht (5, 19, 26) wird eine zweite dielektrische Schicht (9, 20, 27) aufgebracht.

30. Verfahren nach Anspruch 29, **dadurch gekennzeichnet, dass** die erste dielektrische Schicht (3, 14) $TiO_2$ und/oder $TiO_xN_y$ durch Sputtern eines keramischen Targets aufgebracht werden.

31. Verfahren nach Anspruch 29, **dadurch gekenn-**

**zeichnet, dass** die erste dielektrische Schicht (3, 14) $TiO_2$ und/oder $TiO_xN_y$ durch reaktives Sputtern aufgebracht werden.

32. Verfahren nach Anspruch 29, **dadurch gekennzeichnet, dass** die erste und die zweite Blockerschicht (5, 8, 16, 19, 25, 26) Ti, $TiO_x$, Ni, Cr, NiCr, Nb, $CrO_x$, $NbO_x$ und/oder $NiCrO_x$ durch reaktives Sputtern aufgebracht werden.

33. Verfahren nach Anspruch 29, **dadurch gekennzeichnet, dass** die erste und die zweite Blockerschicht (5, 8, 16, 19, 25, 26) Ti, $TiO_x$, Ni, Cr, NiCr, Nb, $CrO_x$, $NbO_x$ und/oder $NiCrO_x$ durch Sputtern eines keramischen oder eines metallischen Targets unter Argon aufgebracht werden.

34. Verfahren nach Anspruch 29, **dadurch gekennzeichnet, dass** die Haftvermittlerschicht (6, 17, 24) $ZnAlO_x$ durch reaktives Sputtern eines Metalltargets aufgebracht wird.

35. Verfahren nach Anspruch 29, **dadurch gekennzeichnet, dass** die Haftvermittlerschicht (6, 17, 24) $ZnAlO_x$ durch Sputtern eines keramischen Targets aufgebracht wird.

36. Verfahren nach Anspruch 29, **dadurch gekennzeichnet, dass** die Infrarotstrahlung reflektierende Schicht durch Sputtern unter Zugabe von geringen Mengen an Sauerstoff aufgebracht wird.

37. Verfahren nach Anspruch 29, **dadurch gekennzeichnet, dass** die zweite dielektrische Schicht (9, 21) $TiO_2$, $Si_3N_4$, AlN, $Al_2O_3$, $SiO_2$, $Ta_2O_5$, $ZrO_2$, $Bi_2O_3$, $In_2O_3$, $SnO_2$ und/oder ZnO mittels reaktivem Sputtern aufgebracht werden.

38. Verfahren nach Anspruch 29, **dadurch gekennzeichnet, dass** die zweite dielektrische Schicht (9, 21) $TiO_2$, $Si_3N_4$, AlN, $Al_2O_3$, $SiO_2$, $Ta_2O_5$, $ZrO_2$, $Bi_2O_3$, $In_2O_3$, $SnO_2$ und/oder ZnO durch Sputtern eines keramischen Targets aufgebracht werden.

39. Verfahren nach Anspruch 29, **dadurch gekennzeichnet, dass** auf die zweite dielektrische Schicht (9, 20, 27) weitere dielektrische Schichten (21, 22) durch reaktives Sputtern aufgebracht werden.

40. Verfahren nach Anspruch 29, **dadurch gekennzeichnet, dass** auf die zweite dielektrische Schicht (9, 20, 27) weitere dielektrische Schichten (21, 22) durch Sputtern eines keramischen Targets aufgebracht werden.

41. Verfahren nach Anspruch 29, **dadurch gekennzeichnet, dass** die Schritte d) bis h) wiederholt werden.

2 →

| Si₃N₄ | 9 |
| NiCrOₓ | 8 |
| Ag | 7 |
| ZnAlOₓ | 6 |
| NiCrOₓ | 5 |
| Si₃N₄ | 4 |
| TiOₓNy | 3 |
| Substrat | 1 |

**Fig. 1**

10 →

| TiO₂ | 11 |
| Si₃N₄ | 9 |
| NiCrOₓ | 8 |
| Ag | 7 |
| ZnAlOₓ | 6 |
| NiCrOₓ | 5 |
| Si₃N₄ | 4 |
| TiOₓNy | 3 |
| Substrat | 1 |

**Fig. 2**

29

| | |
|---|---|
| Si₃N₄ | 9 |
| NiCrOₓ | 8 |
| Ag | 7 |
| ZnAlOₓ | 6 |
| TiOₓNy | 3 |
| Si₃N₄ | 4 |
| Substrat | 1 |

**Fig. 3**

13

| | |
|---|---|
| TiO$_2$ | 28 |
| Si$_3$N$_4$ | 27 |
| NiCrO$_x$ | 26 |
| Ag | 25 |
| ZnAlO$_x$ | 24 |
| NiCrO$_x$ | 23 |
| Si$_3$N$_4$ | 22 |
| TiO$_2$ | 21 |
| Si$_3$N$_4$ | 20 |
| NiCrO$_x$ | 19 |
| Ag | 18 |
| ZnAlO$_x$ | 17 |
| NiCrO$_x$ | 16 |
| Si$_3$N$_4$ | 15 |
| TiO$_x$N$_y$ | 14 |
| Substrat | 12 |

Fig. 4

**Europäisches Patentamt**

# EUROPÄISCHER RECHERCHENBERICHT

Nummer der Anmeldung

EP 06 00 4325

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2003/049464 A1 (GLENN DARIN ET AL) 13. März 2003 (2003-03-13) <br><br> * Absätze [0026] - [0050] * | 1,2, 4-18, 20-41 | INV. C03C17/36 |
| Y | * Ansprüche 1-22; Tabellen 1-6 * <br> ----- | 3,19 | |
| X | US 2004/086723 A1 (THOMSEN SCOTT V ET AL) 6. Mai 2004 (2004-05-06) <br><br><br> * Absatz [0038] * <br> * Abbildung 1; Tabellen 1,2,6 * <br> ----- | 1,6-8, 10-13, 29,37, 38,41 | |
| X | WO 03/093186 A (CARDINAL CG COMPANY; HOFFMAN, WAYNE, L) 13. November 2003 (2003-11-13) <br> * Seite 17, Zeile 13 - Seite 29, Zeile 13; Abbildung 2 * <br> ----- | 15,18, 20-24, 26-28 | |
| X | US 2004/005467 A1 (NEUMAN GEORGE ET AL) 8. Januar 2004 (2004-01-08) <br><br><br> * Abbildung 1 * <br> ----- | 15,16, 18, 21-24, 26-28 | RECHERCHIERTE SACHGEBIETE (IPC) <br><br> C03C |
| X | US 2005/196622 A1 (LAIRD RONALD E ET AL) 8. September 2005 (2005-09-08) <br><br><br> * Abbildung 2; Beispiele 3,4 * <br> ----- | 15,16, 18, 21-24, 26-28 | |
| X | US 2004/043226 A1 (LAIRD RONALD E ET AL) 4. März 2004 (2004-03-04) <br> * Absatz [0050]; Abbildung 5 * <br> ----- | 15,23-25 | |
| | -/-- | | |

Der vorliegende Recherchenbericht wurde für alle Patentansprüche erstellt

| Recherchenort | Abschlußdatum der Recherche | Prüfer |
|---|---|---|
| München | 4. September 2006 | Wrba, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**Europäisches Patentamt**

# EUROPÄISCHER RECHERCHENBERICHT

Nummer der Anmeldung

EP 06 00 4325

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 4 861 669 A (GILLERY ET AL) 29. August 1989 (1989-08-29) * Spalte 2, Zeilen 25-35 * * Ansprüche 1-6; Beispiel 3 * ----- | 3,19 | |
| A,D | DE 195 20 843 A1 (BALZERS UND LEYBOLD DEUTSCHLAND HOLDING AG, 63450 HANAU, DE) 12. Dezember 1996 (1996-12-12) * Seite 3, Zeilen 24-29 * ----- | 6,22 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 4. September 2006 | Wrba, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

---

**GEBÜHRENPFLICHTIGE PATENTANSPRÜCHE**

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

---

**MANGELNDE EINHEITLICHKEIT DER ERFINDUNG**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☒ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches Patentamt**

**MANGELNDE EINHEITLICHKEIT DER ERFINDUNG ERGÄNZUNGSBLATT B**

**Nummer der Anmeldung**

EP 06 00 4325

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-14,29-41

   Infrarotstrahlung reflektierendes Schichtsystem sowie deren Herstellung auf einer Glasscheibe bestehend aus der Abfolge: Glasscheibe / Dielektrikum / Preblocker / Blocker / Haftvermittler / Infrarot-Reflektor / Blocker / Dielektrikum
   ---

2. Ansprüche: 15-28

   nfrarotstrahlung reflektierendes Schichtsystem auf einer Glasscheibe bestehend aus der Abfolge: Glasscheibe / Preblocker / Dielektrikum / Haftvermittler / Infrarot-Reflektor / Blocker / Dielektrikum
   ---

**ANHANG ZUM EUROPÄISCHEN RECHERCHENBERICHT**
**ÜBER DIE EUROPÄISCHE PATENTANMELDUNG NR.**                    EP 06 00 4325

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-09-2006

| Im Recherchenbericht angeführtes Patentdokument | Datum der Veröffentlichung | Mitglied(er) der Patentfamilie | Datum der Veröffentlichung |
|---|---|---|---|
| US 2003049464 A1 | 13-03-2003 | CA 2366406 A1<br>US 2003148115 A1 | 04-03-2003<br>07-08-2003 |
| US 2004086723 A1 | 06-05-2004 | KEINE | |
| WO 03093186 A | 13-11-2003 | AU 2003225213 A1<br>AU 2003231184 A1<br>CA 2482526 A1<br>CA 2482528 A1<br>EP 1499568 A1<br>EP 1501767 A1<br>JP 2005523869 T<br>JP 2005523870 T<br>WO 03093187 A1 | 17-11-2003<br>17-11-2003<br>13-11-2003<br>13-11-2003<br>26-01-2005<br>02-02-2005<br>11-08-2005<br>11-08-2005<br>13-11-2003 |
| US 2004005467 A1 | 08-01-2004 | KEINE | |
| US 2005196622 A1 | 08-09-2005 | WO 2005091864 A2 | 06-10-2005 |
| US 2004043226 A1 | 04-03-2004 | AU 2003265497 A1<br>CA 2495703 A1<br>EP 1546055 A1<br>WO 2004022499 A1<br>US 2004180214 A1 | 29-03-2004<br>18-03-2004<br>29-06-2005<br>18-03-2004<br>16-09-2004 |
| US 4861669 A | 29-08-1989 | KEINE | |
| DE 19520843 A1 | 12-12-1996 | EP 0747330 A1<br>ES 2132805 T3<br>JP 8336928 A<br>KR 171175 B1<br>US 5962115 A | 11-12-1996<br>16-08-1999<br>24-12-1996<br>15-01-1999<br>05-10-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19520843 A1
- EP 1089947 B1
- US 6576349 B2
- US 6686050 B2
- DE 19850023 A1
- EP 0999192 B1